Europäisches Patentamt

European Patent Office

Office européen des brevets

(11) Veröffentlichungsnummer: **0 263 294**
**A2**

## (12) EUROPÄISCHE PATENTANMELDUNG

(21) Anmeldenummer: **87112442.6**

(22) Anmeldetag: **27.08.87**

(51) Int. Cl.4 **H02J 7/00** , H04R 25/00

(30) Priorität: **03.10.86 DE 3633722**

(43) Veröffentlichungstag der Anmeldung:
**13.04.88 Patentblatt 88/15**

(84) Benannte Vertragsstaaten:
**AT BE CH DE ES FR GB IT LI NL SE**

(71) Anmelder: **SONAR Design & Hörtechnik GmbH**
**Ludgeriplatz 8**
**D-4400 Münster(DE)**

(72) Erfinder: **Aumann, Gregor**
**Langeworth 13**
**D-4400 Münster(DE)**

(74) Vertreter: **Habbel, Hans-Georg, Dipl.-Ing.**
**Postfach 3429 Am Kanonengraben 11**
**D-4400 Münster(DE)**

(54) **Drahtlose Ladeschaltung für Hörgeräte.**

(57) Die Erfindung betrifft eine drahtlose Ladeschaltung für Hörgeräte mit einem im Hörgerät eingebauten Akku, wobei im Hörgerät ein Schwingkreis mit nachgeschalteter Einweggleichrichtung angeordnet ist, in einem zur Aufnahme des Hörgerätes bestimmten Etui ein Hochfrequenzgenerator und eine Stromquelle vorgesehen ist und das Hörgerät im Etui lagebestimmt angeordnet werden kann.

EP 0 263 294 A2

## "Drahtlose Ladeschaltung für Hörgeräte"

Die Erfindung bezieht sich auf eine drahtlose Ladeschaltung für Hörgeräte gemäß dem Oberbegriff des Hauptanspruches.

Viele bekannte Hörgeräte arbeiten mit Akkuzellen, die es erforderlich machen, daß nach Spannungsverlust der Akkuzelle der Akku in einem eigenst dafür vorgesehenen Ladegerät, welches z. B. an ein 220 Volt/50 Hz Netz angeschlossen wird, wieder aufgeladen wird. Hierzu wird der Akku aus der Batterielade des Hörgerätes entnommen und in die Aufnahmetasche des Ladegerätes gelegt. Das Ladegerät selbst wird dann mit eingesetztem Akku an die 220 Volt Steckdose angeschlossen.

Nachteilig bei dieser Anordnung ist, daß bei ganztätiger Benutzung des Hörgerätes der Ladevorgang vom Hörgeräteträger üblicherweise täglich wiederholt werden muß.

Bei älteren Personen ist der oben genannte Vorgang häufig problembehaftet, weil eine gewisse manuelle Geschicklichkeit vorausgesetzt werden muß. So ist es relativ schwer, den kleinen Akku in die entsprechen de Aufnahmetasche des Ladegerätes zu führen, wobei zudem noch auf die richtige Polarisierung geachtet werden muß.

Aus der US-PS 43 79 988 ist eine gattungsbildende drahtlose Ladeschaltung bekannt, die aus einem das Hörgerät aufnehmenden Etui besteht, das selbst über ein Kabel an eine Stromquelle angeschlossen werden kann. Im Etui ist ein Ein- und Ausschalter und eine die Betriebsbereitschaft anzeigende Lampe vorgesehen. Bei der bekannten Anordnung müssen die Achsen der Empfängerspule und der Senderspule parallel sein, d. h. die Achsen der Magnetfelder müssen parallel ausgerichtet sein, um damit die möglichst günstigste und wirkungsvollste Übertragung zu erreichen. In den Hörgeräten selbst sind daher zusätzliche Leuchtdioden angeordnet, die ein Ausrichten des Hörgerätes in diese vorteilhafte Lage innerhalb der entsprechenden Aufnahmeräume anzeigen. Die im Hörgerät vorgesehene Leuchtdiode ermöglicht also ein entsprechendes Einpegeln der für eine wirkungsvolle Arbeitsweise zusammenwirkenden Bauteile.

Diese bekannte Anordnung hat den Nachteil, daß für ältere Personen die Handhabung des Gerätes schwierig ist. Der Wirkungsgrad der bekannten Einrichtung ist nicht ausreichend hoch und die beim Ladevorgang entstehenden hohen Frequenzen stören die postalischen Vorschriften.

Ausgehend von der gattungsbildenden Einrichtung liegt der Erfindung die Aufgabe zugrunde, die bekannte Anordnung dahingehend zu verbessern, daß einerseits der Wirkungsgrad erhöht wird, andererseits die Handhabung erleichtert und unkompliziert wird und drittens sicherzustellen, daß die durch den Ladevorgang entstehenden hohen Frequenzen die postalischen Vorschriften nicht stören.

Diese der Erfindung zugrundeliegende Aufgabe wird dadurch gelöst, daß die im Hörgerät angeordnete Spule zum Schwingkreis ergänzt ist und dieser Schwingkreis auf die Frequenz des Hochfrequenzgenerator abgestimmt ist.

Durch diese Anordnung wird erreicht, daß mehr Energie mit einem schwächeren Magnetfeld übertragen werden kann, d. h. der Wirkungsgrad der Aufladung ist wesentlich höher als bei der bekannten Anordnung.

Da höhere Frequenzen vorliegen, muß das das Hörgerät aufnehmende Etui während des Ladevorganges geschlossen sein und, um ein zusätzliches Ein-und Ausschalten zu vermeiden, wird der Schwingkreis eingesetzt, der nunmehr ermöglicht, daß automatisch, aber auch nur dann, wenn das Hörgerät eingesetzt ist, Energie verbraucht wird. Aus diesem Grunde ist z. B. der Betrieb der erfindungsgemäßen Ladeschaltung mit einer einfachen Batterie möglich, ohne daß bei nicht eingesetztem Gerät ein Energieverbrauch eintritt. Der Senderoszillator wird periodisch eingeschaltet und bei eingelegtem Hörgerät wird durch den Schwingkreis des eingelegten Hörgerätes von dem Magnetfeld, das durch die Senderspule erzeugt wird, Energie abgegeben, die meßbar ist, wodurch dadurch eine zusätzliche Schaltung vermieden wird. Diese Auswirkung des im Hörgerät eingeschalteten Schwingkreises hat insbesondere für die Geräte Bedeutung, die von älteren Leuten benutzt werden, die also hinsichtlich der Handhabung des Ladegerätes aus körperlichen Gründen behindert sind.

Der Einsatz von Schwingkreisen generell ist z. B. aus der US-PS 42 67 410 bekannt. Bei dieser bekannten Anordnung hat der Schwingkreis die Aufgabe, nur die Senderinformationen auszufiltern. die zwischen 10,7 MHz und 11,7 MHz liegen, d. h. also im wesentlichen bei 11,2 MHz vorliegen und dieses ist der erwünschte Frequenzbereich. Die aus der US-PS 42 67 410 bekannte Anordnung beschäftigt sich nicht mit der Möglichkeit der Wiederaufladung eines Hörgerätes und diese vor der US-PS 43 79 988 veröffentlichte Lehre hat offensichtlich dem Erfinder der US-PS 43 79 988 keine Anregung in Richtung der erfindungsgemäßen Lösung der der Erfindung zugrundeliegenden Aufgabe gegeben.

Zusammenfassend ist also festzustellen, daß durch das erfindungsgemäße Gerät ein höherer Wirkungsgrad erreicht wird, eine geringere Bauteilgröße möglich wird, trotzdem die genügende Spannung zur Aufladung des Gerätes zur Verfügung steht, wobei diese Vorteile durch die Resonanzaufschaukelung einer Schwingkreisanordnung erreicht werden.

Die vorbeschriebene Ladeschaltung ist von besonderer Bedeutung bei Hörgeräten, die in ihrer Bauform so klein gehalten sind, daß sie im Gehörgang selbst untergebracht werden können, wobei trotz der Kleinheit des Gerätes die Handhabung und der Wirkungsgrad verbessert werden.

## Ansprüche

Drahtlose Ladeschaltung für Hörgeräte mit einem im Hörgerät eingebauten Akku, einer im Hörgerät eingebauten Spule mit nachgeschalteter Einweggleichrichtung und einem zur Aufnahme des Hörgerätes bestimmten Etui, das einen Hochfrequenzgenerator und eine Stromquelle enthält, wobei das Hörgerät im Etui lagebestimmt angeordnet werden kann, dadurch gekennzeichnet, daß die im Hörgerät angeordnete Spule zum Schwingkreis ergänzt ist und dieser Schwingkreis auf die Frequenz des Hochfrequenzgenerators abgestimmt ist.